# EUROPÄISCHE PATENTSCHRIFT

(11) **EP 1 163 986 B1**
(45) Veröffentlichungstag und Bekanntmachung des Hinweises auf die Patenterteilung: **12.03.2008**
(21) Anmeldenummer: 01113248.7
(22) Anmeldetag: 31.05.2001
(51) Int. Cl.: B25J 19/00, H02G 11/00

(54) **Vorrichtung zum Festlegen eines Kabelführungsschlauchs**
Device for securing a cable guide hose
Dispositif de fixation d'un tuyau de guidage de câbles

(30) Priorität: 15.06.2000 DE 20010696 U; 24.08.2000 DE 20014649 U
(43) Veröffentlichungstag der Anmeldung: 19.12.2001
(73) Patentinhaber: KUKA Roboter GmbH, 86165 Augsburg (DE)
(72) Erfinder: Karlinger, Stefan, 86199 Augsburg (DE)
(74) Vertreter: Lempert, Jost

(56) Entgegenhaltungen:
- DE-U- 9 103 497
- DE-U- 29 814 416

## Beschreibung

Die Erfindung betrifft eine Vorrichtung zum Festlegen eines Kabelführungsschlauchs an einer Einrichtung, wie insbesondere einem Roboter.

Derartige Kabelführungs- oder Schutzschläuche kommen vornehmlich bei Robotern mit mehreren relativ zueinander verschwenkbaren Teilen, insbesondere Roboterarmen, zum Einsatz, um elektrische Kabel zur Stromversorgung des Roboters oder eines in einer Roboterhand angeordneten Werkzeugs außenseitig des Roboters zu führen. Da es während des Betriebs zu Distanzänderungen zwischen einzelnen Punkten des Roboters kommt, müssen die Kabelführungsschläuche einerseits Längenveränderungen aufnehmen können, andererseits bei Bewegungen des Roboters möglichst wenig belastet werden, um eine hohe Standfestigkeit zu gewährleisten und ein unzeitiges Versagen zu verhindern.

Am Ende des Kabelführungsschlauches sollten die in diesem geführten Kabel sowohl axial- als auch drehfest gehalten sein, um Beschädigungen der Kabel durch Verschieben, Verdrillen und Herausziehen aus dem Kabelführungsschlauch zu vermeiden und eine hinreichende Zugentlastung der Kabel wie auch eine hinreichende Entlastung der Anschlüsse für die Kabel an dem Roboter bzw. an dem Werkzeug zu gewährleisten. Der Kabelführungsschlauch sollte hingegen zwar ebenfalls axialfest, aber um seine Längsmittelachse drehbar am Roboter gelagert sein, um Verwindungen infolge der Bewegungen des Roboters während des Betriebs zu vermeiden.

Es ist bekannt, die Kabel in Form eines Leitungsbündels durch Klemmen axial- und drehfest am Roboter zu befestigen und den Kabelführungsschlauch separat um seine Längsmittelachse drehbar am Roboter zu lagern. Nachteilig hierbei ist die Erfordernis zweier verschiedener Lagerteile, was zum einen aufwendig und teuer ist, zum anderen einen relativ großen Platzbedarf erfordert, der insbesondere im Bereich der in der Regel um mehrere Achsen verschwenkbaren, hochbeweglichen Roboterhand nur begrenzt zur Verfügung steht. Ferner ist es bekannt, sowohl den Kabelführungsschlauch als auch die Kabel gemeinsam um die Längsmittelachse des Schlauchs drehbar am Roboter festzulegen, was aus den genannten Gründen zu einer Beschädigung der Kabel führen kann.

Der Erfindung liegt die Aufgabe zugrunde, eine preiswerte und platzsparende Vorrichtung der eingangs genannten Art vorzuschlagen, die insbesondere den genannten Erfordernissen zum beschädigungsfreien Festlegen eines Kabelführungsschlauchs und der in diesem verlaufenden Kabel an einer maschinellen Einrichtung, wie insbesondere einem Roboter, Rechnung trägt.

Erfindungsgemäß wird diese Aufgabe bei einer Vorrichtung der eingangs genannten Art dadurch gelöst, dass der Kabelführungsschlauch axialfest und mindestens ein mit diesem in Verbindung stehendes Halteteil axial- und drehfest an der Einrichtung gehalten sind.

Der Kabelführungsschlauch wird also axialfest und weitere Halteteile werden dreh- und axialfest aus der Einrichtung, wie dem Roboter, gehalten.

In bevorzugten Ausgestaltungen ist vorgesehen, dass das Halteteil drehfest in der Klemmschelle gehalten ist und insbesondere, dass das Halteteil eine im Kabelführungsschlauch verlaufende Kabel kraftschlüssig haltende Kabelnuss aufnimmt. Es ist hier eine Klemmschelle zum axialfesten Festlegen sowohl einer die Kabel formschlüssig haltenden Kabelnuss als auch eines Endes des Kabelführungsschlauchs vorgesehen, wobei zwischen der Kabelnuss und der Klemmschelle eine drehfeste Verbindung vorgesehen ist, während die Verbindung zwischen dem Kabelführungsschlauch und der Klemmschelle insbesondere relativ zueinander drehbar bleibt.

Die erfindungsgemäße Vorrichtung ermöglicht eine kompakte und einfach montier- bzw. demontierbare Anordnung der Kabel gemeinsam mit dem Kabelführungsschlauch, wobei eine relative Drehbarkeit der die Kabel formschlüssig aufnehmenden Kabelnuss bezüglich des Kabelführungsschlauchs sichergestellt ist, indem die Kabelnuss dreh- und axialfest in der Klemmschelle gehalten ist, während das Ende des Kabelführungsschlauchs ebenfalls axialfest, aber drehbar in derselben Klemmschelle gelagert ist. Sie ist insbesondere zum Festlegen der Kabelführung eines Roboters im Bereich der Roboterhand geeignet, indem die Klemmschelle derart im Bereich der Roboterhand angeordnet wird, dass die z.B. zur Stromversorgung eines Werkzeugs des Roboters dienenden Kabel mittels der Kabelnuss an der der Roboterhand zugekehrten Seite und der Kabelführungsschlauch an der der Roboterhand abgewandten Seite in der Klemmschelle fixiert werden.

In bevorzugter Ausführung ist vorgesehen, dass die Klemmschelle innenseitig jeweils wenigstens ein Halteprofil zum axial formschlüssigen Festlegen eines Halteteils für den Kabelführungsschlauch und eines Halteteils für die Kabelnuss mit jeweils einem zum dem Halteprofil der Klemmschelle komplementären Profil aufweist. Hierbei weisen die Halteprofile der Klemmschelle insbesondere einen hinreichenden axialen Abstand auf, um zwischen den einander zugekehrten Stirnseiten des Kabelführungsschlauchs und der Kabelnuss für einen Zwischenraum zu sorgen und somit die relative Drehbarkeit des Kabelführungsschlauchs bezüglich der Kabelnuss nicht zu beeinträchtigen.

Um für eine einfache und schnelle Montage zu sorgen, weist das Halteteil für den Kabelführungsschlauch bevorzugt zwei Halbringe auf, die an ihrer Innenseite mit einer Haltestruktur zum axial formschlüssigen Festlegen am Umfang des Kabelführungsschlauchs ausgestattet sind. Sofern der Kabelführungsschlauch zumindest endseitig im Schnitt eine Wellung, insbesondere eine rechteck- oder trapezförmige Wellung hat, weist die Haltestruktur der Halteringe für den Kabelführungsschlauch vorzugsweise eine in die gewellte Struktur des Kabelführungsschlauchs eingreifende Haltestruktur auf. Alternativ kann die Haltestruktur der Halteringe beispielsweise auch zum Aufnehmen eines am Ende des Kabelführungsschlauchs ausgeformten Umfangswulstes oder dergleichen ausgebildet sein.

Entsprechend der Ausbildung des Halteteils für den Kabelführungsschlauch ist in bevorzugter Ausführung vorgesehen, dass auch das Halteteil für die Kabelnuss zwei Halbringe aufweist, die an ihrer Innenseite mit einer Haltestruktur zum axial formschlüssigen Festlegen an einer zu dieser komplementären, am Umfang der Kabelnuss angeordneten Festlegestruktur ausgestattet sind.

Zum drehfesten Festlegen der Kabelnuss in der Klemmschelle ist mit Vorzug zumindest ein Halbring des Halteteils für die Kabelnuss mittels eines ihn durchsetzenden Stiftes sowohl an der Kabelnuss als auch an der Klemmschelle drehfest fixierbar, wobei insbesondere an der der Kabelnuss zugewandten Stirnseite der Klemmschelle eine Nut zum Aufnehmen eines Endes des Stiftes und am Umfang der Kabelnuss im Bereich der Festlegestruktur eine Ausnehmung zum Aufnehmen des anderen Endes des Stiftes angeordnet ist.

Um einen erhöhten Schutz der Kabel vor Abrieb durch den sich drehenden Schlauch zu gewährleisten, ist in Weiterbildung vorgesehen, dass die Kabelnuss einen in den Kabelführungsschlauch eingreifenden Zentrieransatz aufweist, der die Verbindungsstelle zwischen der Kabelnuss und dem Kabelführungsschlauch an dessen Innenseite abdeckt.

Um eine einfache Bestückung der Kabelnuss mit den Kabeln zu gewährleisten, ist die Kabelnuss vorzugsweise nach Art eines Klemmstücks mit mehreren axial angeordneten Haltekanälen zum kraftschlüssigen Festlegen der Kabel ausgebildet und besteht insbesondere aus einem elastischen Material, wobei die Haltekanäle über Schlitze mit dem Umfang der Kabelnuss verbunden sind. Derart sind die Kabel auf einfache Weise über die Schlitze in die Haltekanäle einbringbar und - sofern ein Austausch der Kabel erforderlich ist - aus den Haltekanälen ausbringbar.

Zum Sicherstellen einer kraftschlüssigen Verbindung zwischen den Kabeln und der Kabelnuss ist mit Vorzug eine die Kabelnuss an ihrer der Klemmschelle abgewandten Seite umgreifende Spannschelle vorgesehen, deren Spannkraft insbesondere variabel ist, um Kabel mit unterschiedlichem Durchmesser in der Kabelnuss festzusetzen.

Wie bereits erwähnt, ist die Klemmschelle insbesondere an einem Teil des Roboters, insbesondere im Bereich der Roboterhand, mittels beliebiger Haltemittel, wie Schrauben, Bolzen, Klammern oder dergleichen, befestigbar.

In einer weiteren äußerst bevorzugten Ausgestaltung der Erfindung ist vorgesehen, dass ein Halteteil eine Hülse mit einer Kugelschicht-Außenfläche aufweist und die Hülse bezüglich der Längsmittelachse der Schelle sowohl dreh- als auch schwenkbar an derselben gehalten ist. Hierdurch wird insbesondere ein größtmöglicher Schutz des Kabelführungsschlauchs selbst vor an diesem angreifenden Dreh- und Biegemomenten gewährleistet.

Diese bevorzugte Ausgestaltung der Halterung des Kabelführungsschlauchs nach Art eines Kugellagers gewährleistet neben einer freien Drehbarkeit des Kabelführungsschlauchs bezüglich der Schelle insbesondere eine Schwenkbarkeit desselben bezüglich der Längsmittelachse der Schelle. Der Kabelführungsschlauch wird somit wirksam entlastet, indem er vor Torsions- und Biegebeanspruchung geschützt ist, was in einer erhöhten Standzeit resultiert und viele Applikationen erst ermöglicht. So ist die erfindungsgemäße Vorrichtung insbesondere zum Festlegen der Kabelführung eines Roboters im Bereich der Roboterhand geeignet, indem die Schelle derart im Bereich der Roboterhand angeordnet wird, dass die z.B. zur Stromversorgung eines Werkzeugs des Roboters dienenden Kabel mittels einer Kabelnuss an der der Roboterhand zugekehrten Seite und der Kabelführungsschlauch an der der Roboterhand abgewandten Seite dreh- und schwenkbar in der Schelle fixiert werden. Während der Kabelführungsschlauch zweckmäßig frei drehbar an der Schelle gehalten ist, ist er vorzugsweise um etwa 30°, insbesondere etwa 20° in jede Richtung bezüglich der Längsmittelachse der Schelle schwenkbar.

Um für eine einfache und schnelle Montage zu sorgen, weist die Hülse vorzugsweise zwei Halbschalen auf, die an ihrer Innenseite mit Formausbildungen zum axial formschlüssigen Festlegen am Umfang des Kabelführungsschlauchs ausgestattet sind. Sofern der Kabelführungsschlauch zumindest endseitig im Schnitt eine Wellung, insbesondere eine rechteck- oder trapezförmige Wellung hat, greifen die Formausbildungen der Halbschalen der Hülse vorzugsweise in die Wellung des Kabelführungsschlauchs ein. Alternativ können die Formausbildungen der Hülse beispielsweise auch zum Aufnehmen eines am Ende des Kabelführungsschlauchs ausgeformten Umfangswulstes oder dergleichen ausgebildet sein.

Während die Hülse grundsätzlich auch unmittelbar an einem zu ihrer Kugelschicht komplementären Innenprofil der Schelle befestigbar sein kann, ist in bevorzugter Ausführung vorgesehen, dass das Halteteil ferner einen die Hülse aufnehmenden Lagerring mit einer zu der Kugelschicht-Außenfläche der Hülse komplementären Innenfläche aufweist, wobei insbesondere der Lagerring an seiner der Hülse abgewandten Seite mit einem Halteprofil zum Festlegen an der Schelle ausgestattet ist. Derart ist der Kabelführungsschlauch einerseits einfacher montierbar, andererseits kann eine herkömmliche, einfache und preiswerte Schelle eingesetzt werden.

Das Halteprofil des Lagerrings ist entweder an einem zu diesem komplementären Profil der Schelle festlegbar, oder es ist an einem zu diesem komplementären Profil eines Adapterrings festlegbar, der an seiner dem Lagerring abgewandten Seite ein Festlegeprofil zum Festlegen an einem zu diesem komplementären Profil der Schelle aufweist. Letztere Variante ermöglicht insbesondere dann eine platzsparende Anordnung des Kabelführungsschlauchs, wenn der Adapterring an seiner dem Lagerring zugewandten Seite einen größeren Durchmesser als an seiner diesem abgewandten bzw. der Schelle zugewandten Seite aufweist, so dass der Durchmesser der Schelle etwa dem Durchmesser des Kabelführungsschlauchs entsprechen kann. Aus Gründen einer einfachen und schnellen Montage weist der Adapterring vorzugsweise zwei Halbringe auf.

Der Lagerring ist zweckmäßig an seinem Halteprofil entweder unmittelbar oder über den Adapterring axialfest an der Schelle festlegbar.

Wie bereits angedeutet, ist in bevorzugter Ausführung vorgesehen, dass an der dem Kabelführungsschlauch abgewandten Seite der Schelle eine die Kabel kraftschlüssig haltende Kabelnuss axial- und drehfest festlegbar ist. Es ist also die Schelle sowohl zum axialfesten Halten der Kabelnuss als auch eines Endes des Kabelführungsschlauchs vorgesehen, wobei zwischen der Kabelnuss und der Schelle eine drehfeste Verbindung vorgesehen ist, während die Verbindung zwischen dem Kabelführungsschlauch und der Schelle relativ zueinander dreh- und schwenkbar bleibt. Die drehfeste Verbindung zwischen der Schelle und der Kabelnuss kann z.B. durch komplementäre Mehrkantprofile, durch Haltestifte oder beliebige bekannte Mittel sichergestellt sein.

Die Schelle ist bevorzugt eine Spannschelle mit einem an der Maschine mittels beliebiger Haltemittel, wie Schrauben, Bolzen, Klammern oder dergleichen, befestigbaren Unterteil und einem an diesem angelenkten, mittels eines Spannbügels verspannbaren Oberteil. Auf diese Weise ist der Lagerring des Halteteils bzw. der Adapterring fest in der Spannschelle geklemmt und durch Reibungskräfte vorzugsweise drehfest gehalten.

Im übrigen betrifft die Erfindung auch eine maschinelle Einrichtung, wie insbesondere einen Roboter mit zumindest teilweise außenseitig verlaufenden Kabeln, insbesondere Versorgungskabeln von Werkzeugen des Roboters, der mit einer Vorrichtung der vorgenannten Art ausgestattet ist.

Nachstehend ist die Erfindung anhand bevorzugter Ausführungsformen unter Bezugnahme auf die Zeichnungen näher erläutert. Dabei zeigen:
- Fig. 1: eine perspektivische Ansicht einer Ausführungsform einer Vorrichtung zum Festlegen von Kabeln eines Kabelführungsschlauchs in Explosionsdarstellung;
- Fig. 2: einen Querschnitt durch die an einem Kabelführungsschlauch montierte Vorrichtung gemäß Fig. 1;
- Fig. 3: einen Querschnitt durch eine an einem Kabelführungsschlauch montierte alternative Ausführungsform;
- Fig. 4 bis 7: verschiedene Montagesituationen während des Anbringens der Vorrichtung gemäß Fig. 1 und 2 an einem Kabelführungsschlauch;
- Fig. 8: eine perspektivische Ansicht einer Ausführungsform einer Vorrichtung zum Festlegen eines Kabelführungsschlauchs;
- Fig. 9: eine Draufsicht auf die Vorrichtung gemäß Fig. 8 in Richtung Pfeil II;
- Fig. 10: einen Längsschnitt III-III durch die Vorrichtung gemäß Fig. 9;
- Fig. 11: eine perspektivische Ansicht der Vorrichtung gemäß Fig. 8 bis 10 zur Veranschaulichung der Schwenkbarkeit des Kabelführungsschlauchs und
- Fig. 12 bis 19: verschiedene Montagesituationen während des Anbringens der Vorrichtung gemäß Fig. 8 bis 11 an einem Kabelführungsschlauch.

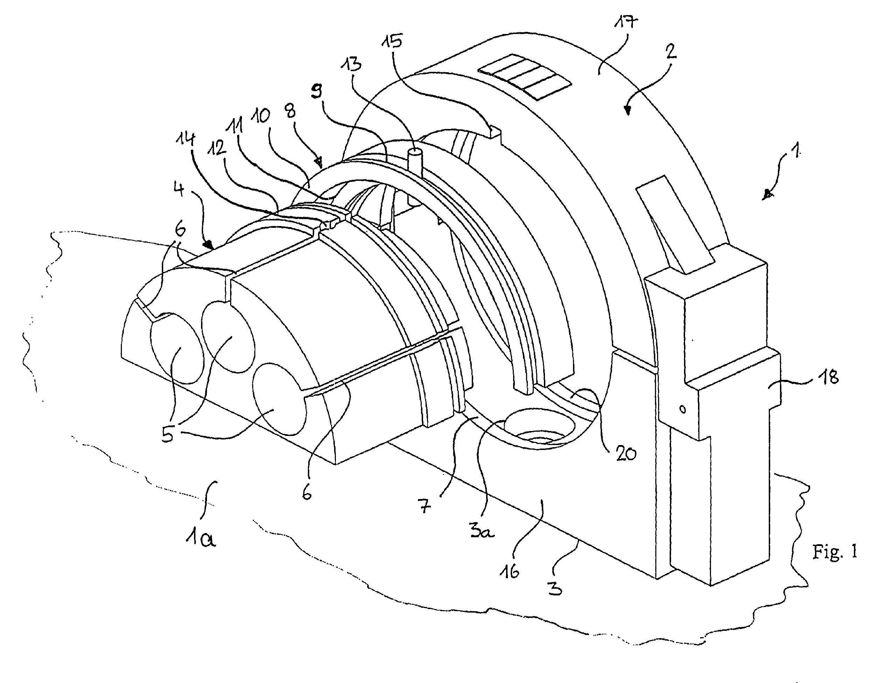

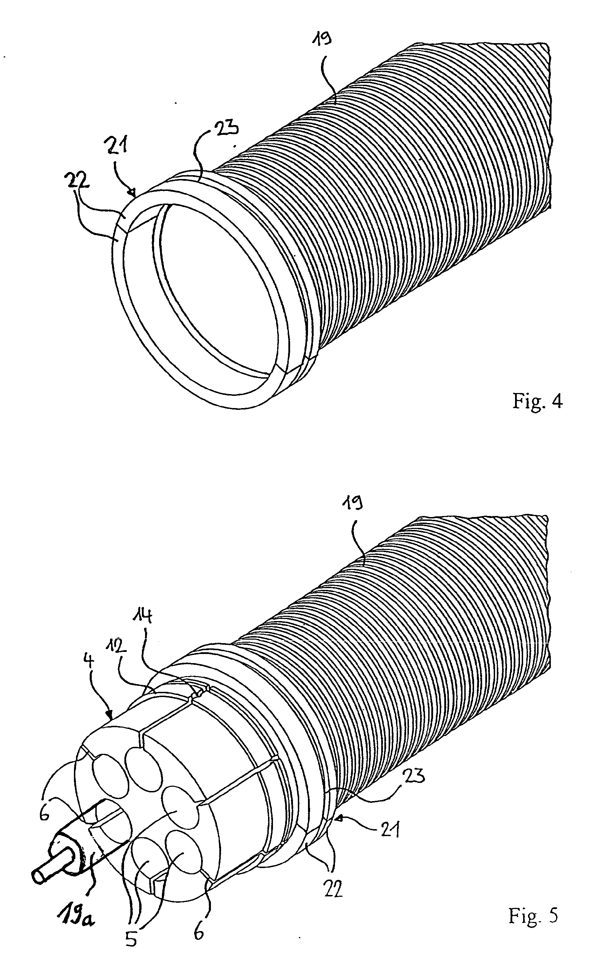

Die in Fig. 1 dargestellte Vorrichtung 1 umfasst eine Klemmschelle 2, die beispielsweise an ihrer ebenen Unterseite 3 über eine Bohrung 3a im Bereich der Roboterhand eines Roboters 1a befestigbar ist und zum Festlegen von zur Stromversorgung von Werkzeugen des Roboters 1a vorgesehenen Kabeln 19a (aus denen lediglich eines in Fig. 5 angedeutet ist) dient. Zum formschlüssigen Halten der Kabel weist die Vorrichtung 1 weiterhin eine in Fig. 1 in Längsrichtung geschnitten dargestellte Kabelnuss 4 aus einem elastischen Material, z.B. Kunststoff, auf. Die Kabelnuss 4 ist nach Art eines Klemmstücks mit mehreren die Kabelnuss 4 axial durchsetzenden Haltekanälen 5 zum kraftschlüssigen Festlegen der Kabel ausgebildet, wobei die Haltekanäle 5 über Schlitze 6 mit dem Umfang der Kabelnuss 4 in Verbindung stehen, um die Haltekanäle 5 auf einfache Weise über die Schlitze 6 mit Kabeln zu bestücken.

Zum axialen Festlegen der Kabelnuss 4 in der Klemmschelle 2 weist diese an ihrer der Kabelnuss 4 zugekehrten Innenseite ein Halteprofil 7 auf, an dem ein Halteteil 8 mit einem zu dem Halteprofil 7 der Klemmschelle 2 komplementären Profil 9 formschlüssig befestigbar ist. In der dargestellten Ausführung umfasst das Halteteil 8 für die Kabelnuss 4 zwei Halbringe 10, von denen der obere exemplarisch wiedergegeben ist. Das Halteprofil 7 der Klemmschelle 2 ist in der gezeigten Ausführung von einem am Innenumfang der Klemmschelle 2 angeordneten Vorsprung gebildet, während das zum Halteprofil 7 komplementäre Profil der Halbringe 10 eine außenseitige Umfangsnut aufweist. Die Halbringe 10 des Halteteils 8 für die Kabelnuss 4 sind an ihrer Innenseite ferner mit einer Haltestruktur 11 zum axial formschlüssigen Festlegen an einer zu dieser komplementären, am der Klemmschelle 2 zugewandten Umfang der Kabelnuss 4 angeordneten Festlegestruktur 12 ausgestattet.

Um die Kabelnuss 4 drehfest in der Klemmschelle 2 zu fixieren, ist ein den Halbring 10 des Halteteils 8 im wesentlichen radial durchsetzender Stift 13 vorgesehen, dessen eines Ende in eine Ausnehmung 14 am Umfang der Kabelnuss 4 im Bereich der Festlegestruktur 12 und dessen anderes Ende in eine an der der Kabelnuss 4 zugewandten Stirnseite der Klemmschelle 2 angeordnete Nut 15 einbringbar ist. Die Klemmschelle 2 besteht in an sich bekannter Weise aus einem insbesondere an einem Roboter befestigbaren Unterteil 16 und einem an diesem angelenkten, mittels eines Spannbügels 18 verspannbaren Oberteil 17.

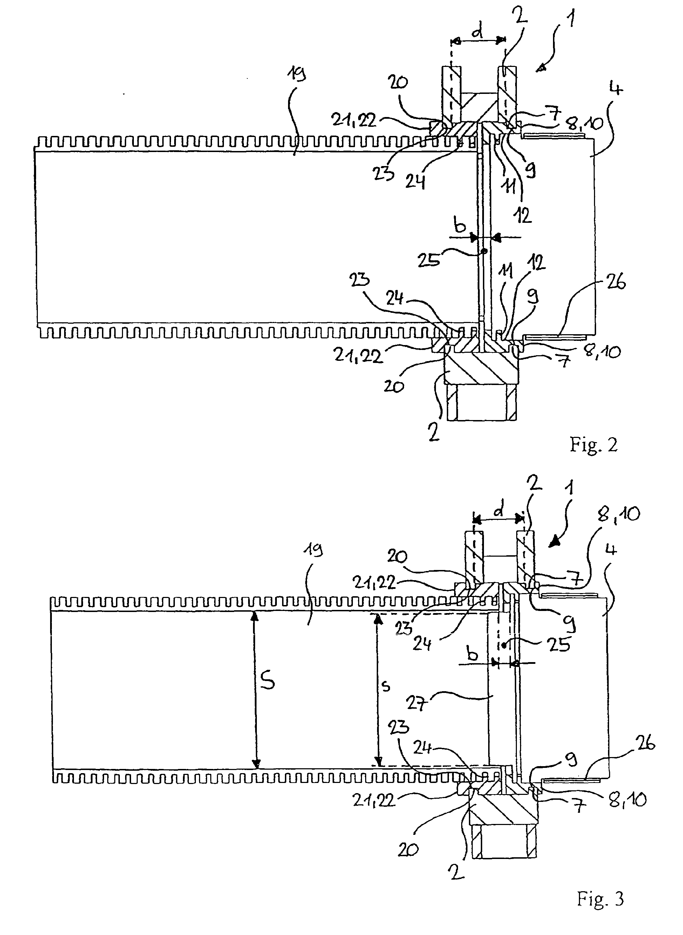

Wie insbesondere aus Fig. 2 ersichtlich, weist die Klemmschelle 2 zum axialfesten Festlegen eines Kabelführungsschlauchs 19 an ihrer der Kabelnuss 4 abgewandten Innenseite ein weiteres Halteprofil 20 auf, welches entsprechend dem Halteprofil 7 zum Festlegen des Halteteils 8 für die Kabelnuss 4 von einem am Innenumfang der Klemmschelle 2 angeordneten Vorsprung gebildet ist. Das Halteprofil 20 dient zum formschlüssigen Festlegen eines Halteteils 21 für den Kabelführungsschlauch 19, welches entsprechend dem Halteteil 8 für die Kabelnuss 4 aus zwei Halbringen 22 besteht und an seinem Außenumfang mit einem zu dem Halteprofil 20 der Klemmschelle 2 komplementären Profil 23 in Form einer außenseitigen Umfangsnut ausgestattet ist. An der Innenseite der Halbringe 22 des Halteteils 21 weist dieses eine Haltestruktur 24 zum axial formschlüssigen Festlegen am Umfang des Kabelführungsschlauchs 19 auf, der in der gezeigten Ausführung im Schnitt rechteck- bzw. trapezförmig gewellt ausgebildet ist, so dass die Haltestruktur 24 in die gewellte Struktur des Kabelführungsschlauchs 19 eingreift. Auf diese Weise ist der Schlauch 19 axialfest, aber drehbar in der Klemmschelle 2 gelagert, während die Kabelnuss 4 sowohl axialfest als auch mittels des Stiftes 13 (Fig. 1) drehfest in der Klemmschelle 2 fixiert ist. Um die relative Drehbarkeit des Kabelführungsschlauchs 19 bezüglich der Kabelnuss 4 nicht durch Reibung zu beeinträchtigen, ist der axiale Abstand d der Halteprofile 7, 20 der Klemmschelle 2 derart gewählt, dass zwischen den einander zugekehrten Stirnseiten des Kabelführungsschlauchs 19 und der Kabelnuss 4 ein Zwischenraum 25 der Breite b gebildet wird.

Zum kraftschlüssigen Festlegen der (nicht dargestellten) Kabel in den Haltekanälen 5 (Fig. 1) der Kabelnuss 4 ist ferner eine die Kabelnuss 4 an ihrem der Klemmschelle 2 abgewandten Umfang umgreifende Spannschelle 26 vorgesehen, deren Spannkraft insbesondere variabel ist, um Toleranzen der Durchmesser der eingesetzten Kabel zu kompensieren.

Die in Fig. 3 dargestellte Ausführungsform unterscheidet sich von der Ausführung gemäß Fig. 2 dadurch, dass die Kabelnuss 4 einen in den Kabelführungsschlauch 19 eingreifenden Zentriereinsatz 27 aufweist, der zum Schutz der Kabel vor mechanischer Beschädigung dient, indem er den Zwischenraum 25 zwischen dem Kabelführungsschlauch 19 und der Kabelnuss innenseitig abdeckt. Um die relative Drehbarkeit des Kabelführungsschlauchs 19 bezüglich der Kabelnuss 4 nicht durch Reibung zu beeinträchtigen, ist der Außendurchmesser s des Zentrieransatzes kleiner als der Innendurchmesser S des Kabelführungsschlauchs.

Nachfolgend ist unter Bezugnahme auf Fig. 4 bis 7 die Montage einer erfindungsgemäßen Vorrichtung an einem Kabelführungs- oder Schutzschlauch näher erläutert.

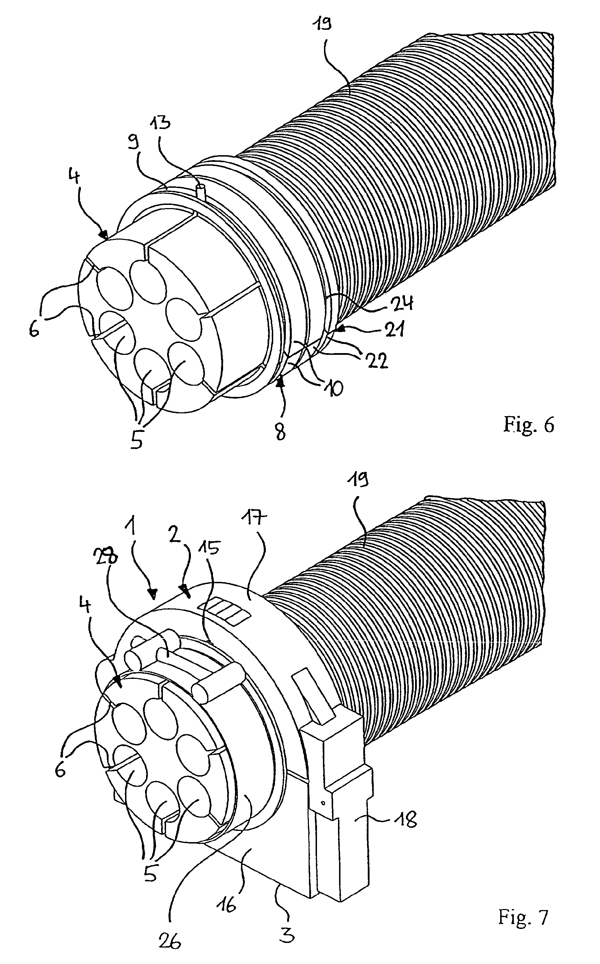

Wie aus Fig. 4 ersichtlich, werden zunächst die Halbringe 22 des Halteteils 21 für den Kabelführungsschlauch 19 über die an ihrer Innenseite angeordnete Haltestruktur 24 (Fig. 2 und 3) am Umfang des zumindest endseitig gewellt ausgebildeten Kabelführungsschlauchs 19 angeordnet und sodann die Kabelnuss 4 positioniert (Fig. 5). Anschließend werden die Halbringe 10 des Halteteils 8 für die Kabelnuss 4 an der Festlegestruktur 12 der Kabelnuss 4 angeordnet und zumindest ein Halbring 13 mittels des ihn radial durchsetzenden und in die Ausnehmung 14 in der Festlegestruktur 12 der Kabelnuss 4 eingreifenden Stiftes 13 gegen Verdrehen gesichert (Fig. 6). Sodann werden die Halteteile 8, 21 über ihre außenseitigen Profile 9, 23 in der Klemmschelle 2 angeordnet und letztere mittels des Spannbügels 18 verschlossen (Fig. 7), wobei der Stift 13 in der am Oberteil 17 der Klemmschelle 2 angeordneten Nut 15 verrastet wird, um die Kabelnuss 4 gegen Verdrehen zu sichern. Schließlich werden die in den Aufnahmekanälen 5 der Kabelnuss 4 festgelegten (nicht dargestellten) Kabel mittels der Spannschelle 26 gesichert und wird mittels einer Spannschraube 28 die gewünschte Klemmung der Kabel in der Kabelnuss 4 eingestellt.

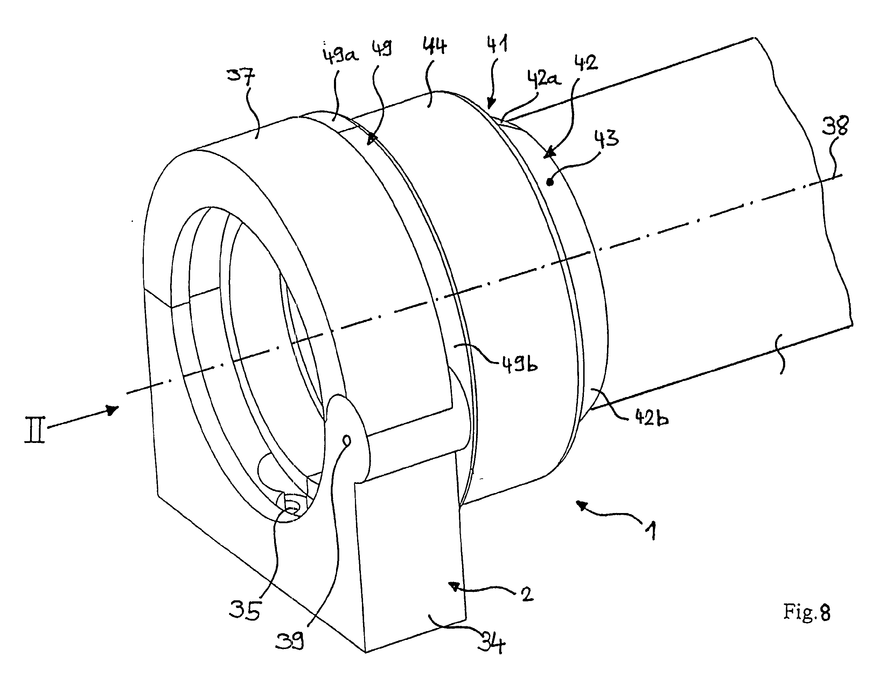

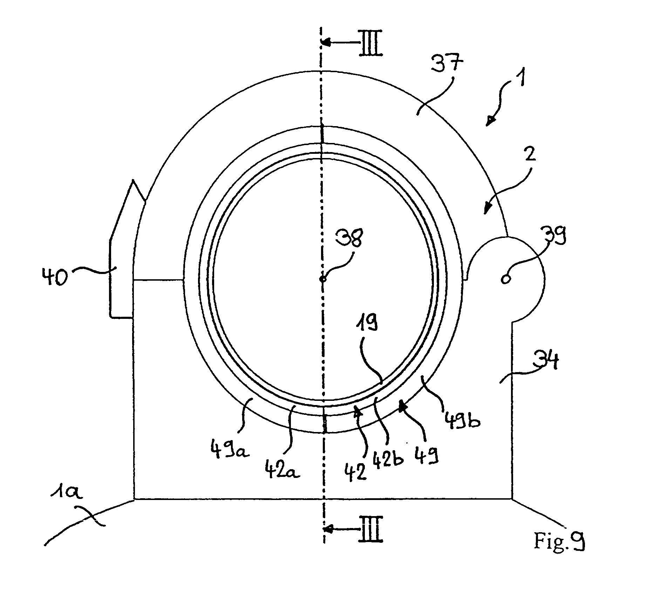

Die in Fig. 8 dargestellte Vorrichtung 1 umfasst eine Schelle 2 in Form einer Spannschelle, die beispielsweise an der ebenen Unterseite eines Unterteils 34 über eine Bohrung 55 im Bereich der Roboterhand eines Roboters 1a befestigbar ist und zum Festlegen eines Kabelführungsschlauchs 19 für zur Stromversorgung vor Werkzeugen des Roboters vorgesehenen Kabeln (nicht gezeigt) dient. Die Spannschelle 2 weist ferner ein an dem Unterteil 34 angelenktes Oberteil 37 auf, welches mittels eines Spannbügels 40 (Fig. 9) an dem Unterteil 34 verspannbar und um eine zur Längsmittelachse 38 der Schelle 2 parallele Achse 39 schwenkbar ist.

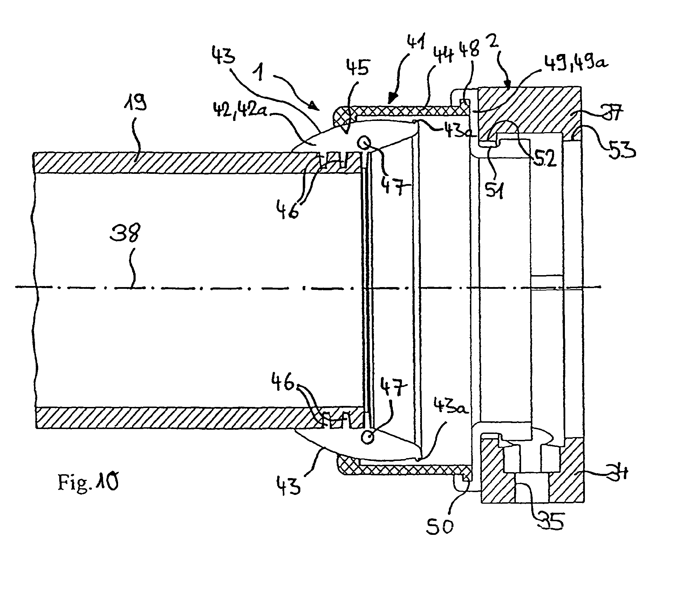

Wie insbesondere aus Fig. 10 ersichtlich, weist die Vorrichtung 1 ein Halteteil 41 auf, welches in der gezeigten Ausführungsform eine Hülse 42 mit einer Kugelschicht-Außenfläche 43 und einen die Hülse 42 aufnehmenden Lagerring 44 mit einer zu der Kugelschicht-Außenfläche 43 der Hülse 42 komplementären Innenfläche 45 umfasst, wobei die Hülse 42 relativ zu dem Lagerring 44 dreh und schwenkbar ist. An der dem Lagering 44 zugewandten Seite der Hülse 42 ist an deren Kugelschicht-Außenfläche 43 eine Umfangserweiterung 43a vorgesehen, die beim Verschwenken des Kabelführungsschlauchs 19 als Anschlag an dem Lagerring 44 dient und die Hülse 42 vor einem Ausziehen aus dem Lagerring 44 sichert.

Die Hülse 42 weist zum Zwecke einer einfachen und schnellen Montage der Vorrichtung 1 zwei Halbschalen 42a, 42b auf, von denen in der Fig. 10 nur die Halbschale 42a dargestellt ist. An der Innenseite der Halbschalen 42a, 42b der Hülse 42 sind Formausbildungen 46 in Form von nach innen ragenden Radialflanschen zum axial formschlüssigen Festlegen am Umfang des Kabelführungsschlauchs 19 vorgesehen, der in der gezeigten Ausführung endseitig im Schnitt beispielsweise trapezförmig gewellt ausgebildet ist, so dass die Formausbildungen 46 in die gewellte Struktur des Kabelführungsschlauchs 19 eingreifen. Auf diese Weise ist der Schlauch 19 nach Art einer Nut-Feder-Verbindung axialfest in der Hülse 42 gehalten, wobei die Formausbildungen 46 die Feder und die Täler des Wellschlauches 19 die Nut bilden. Die Halbschale 42a der Hülse 42 weist an ihrer Verbindungsfläche zu der Halbschale 42b (in Fig. 10 nicht gezeigt) ferner jeweils einen Zentrierstift 47 auf, der in eine mit diesem fluchtende Bohrung in der Halbschale 42b (nicht gezeigt) einbringbar ist. Der Kabelführungsschlauch 19 kann selbstverständlich auch im wesentlichen über seine gesamte Länge eine gewellte Struktur, z.B. eine rechteck- oder trapezförmige Wellung aufweisen, um ihm eine erhöhte Flexibilität zu verleihen.

Der Lagerring 44 ist an seiner der Hülse 42 abgewandten Au-ßenseite mit einem Halteprofil 48 ausgestattet, welches in ein an der Innenseite eines Adapterrings 49 angeordnetes komplementäres Profil 50 eingreift. Während das Halteprofil 48 in der dargestellten Ausführung z.B. als nach außen gerichteter Umfangsvorsprung ausgebildet ist, ist das zu diesem komplementären Profil 50 des Adapterrings 49 als nach innen offene Umfangsnut ausgebildet. Der Adapterring 49 besteht aus Gründen einer einfachen Montage wiederum aus zwei Halbringen 49a, 49b, wobei in der Fig. 10 nur der Halbring 49a dargestellt ist. Der Adapterring 49 ist an seiner dem Lagerring 44 abgewandten Außenseite mit einem Festlegeprofil 51 versehen, um ihn an einem zu diesem komplementären Innenprofil 52 der Schelle 2 festzulegen, wobei das Festlegeprofil 51 des Adapterrings 49 z.B. als nach au-ßen gerichtete Umfangsnut und das Profil 52 der Spannschelle 2 als nach innen vorragender Umfangsvorsprung ausgebildet ist. Auf diese Weise sind der Lagerring 44 und der Adapterring 49 nach Schließen der Spannschelle 2 mittels des Spannbügels 40 (Fig. 9) im wesentlichen dreh- und axialfest gehalten. Der Adapterring 49 weist an seiner dem Lagerring 44 zugewandten Seite ferner einen größeren Durchmesser auf als an seiner diesem abgewandten Seite, um der erfindungsgemäßen Vorrichtung 1 eine erhöhte Kompaktheit zu verleihen. Alternativ könnte die Schelle 2 auch direkt am Halteprofil 48 des Lagerrings 44 angreifen.

An der der Vorrichtung 1 abgewandten Seite weist die Spannschelle 2 ein weiteres Innenprofil 53 auf, welches insbesondere zum dreh- und axialfesten Festlegen einer Kabelnuss (nicht dargestellt) vorgesehen ist und z.B. als Mehrkantprofil ausgebildet sein kann.

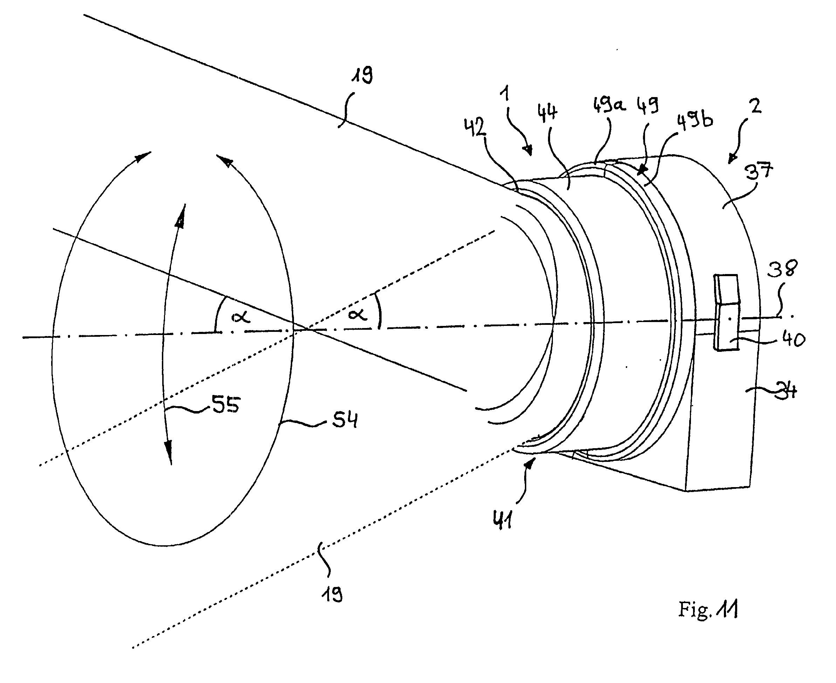

Fig. 11 zeigt eine perspektivische Darstellung der Vorrichtung 1 zur Veranschaulichung der Dreh- und Schwenkbarkeit des Kabelführungsschlauchs 19 bezüglich der Längsmittelachse 38 der Schelle 2. Durch das nach Art eines Kugellagers wirkende Halteteil 41 des Kabelführungsschlauchs 19 ist dieser einerseits frei drehbar (Pfeil 54), andererseits bis zu einem Winkel α in Radialrichtung schwenkbar, wobei der maximale Schwenkwinkel α bei Anschlag der Umfangserweiterung 43a der Kugelschicht-Außenfläche 43 der Hülse 42 am Lagerring 44 des Halteteils 41 erreicht wird (Fig. 10). Der maximale Schwenkwinkel α beträgt je nach Verwendung des Kabelführungsschlauchs 19 zweckmäßig etwa zwischen 20° und 30°. Er kann selbstverständlich auch mehr als 30° betragen, was z.B. auf einfache Weise durch eine Hülse mit einem im Vergleich zu der in Fig. 10 dargestellten Hülse 42 in Axialrichtung längeren nach Art einer Kugelschicht ausgebildeten Oberflächenabschnitt erreicht werden kann.

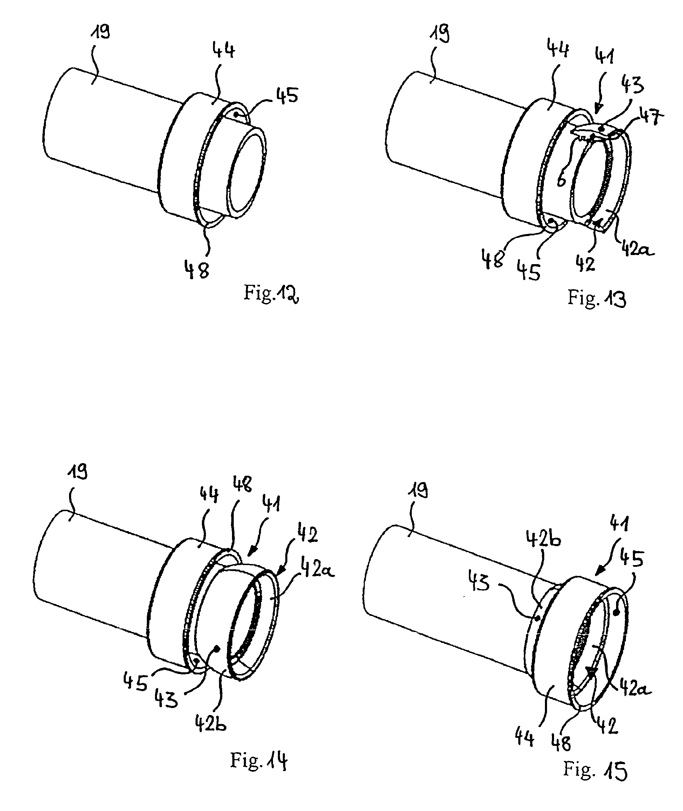

Nachfolgend ist unter Bezugnahme auf Fig. 12 bis 19 die Montage der erfindungsgemäßen Vorrichtung 1 an dem Kabelführungs- oder Schutzschlauch 19 näher erläutert.

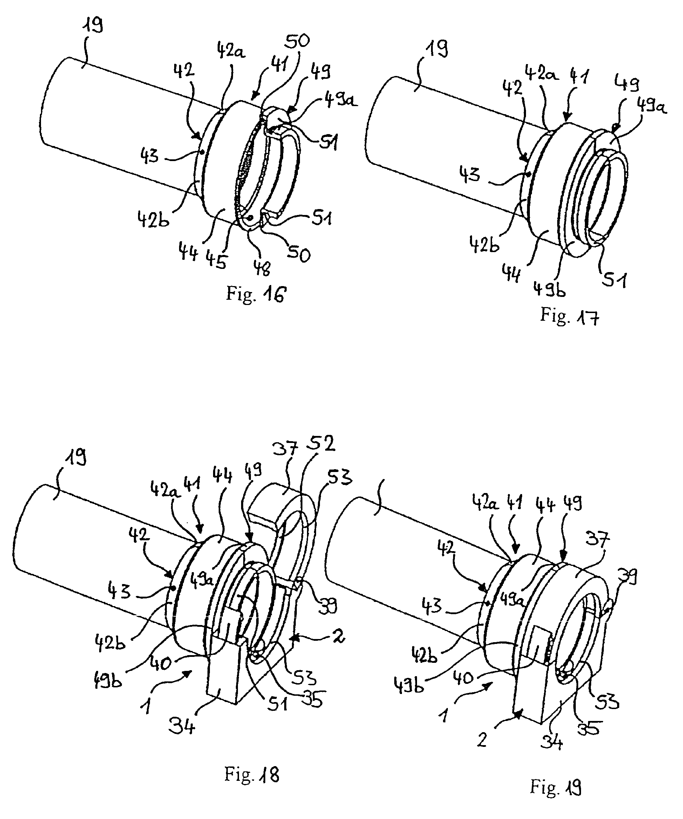

Wie aus Fig. 12 ersichtlich, wird zunächst der Lagerring 44 über das festzulegende Ende des Kabelführungsschlauchs 19 geschoben und sodann die Hülse 42 am Ende des Kabelführungsschlauchs 19 angeordnet (Fig. 13), indem nacheinander die Halbschalen 42a, 42b mittels ihrer Formausbildungen 46 an dem z.B. gewellten Schlauch 19 (nicht dargestellt) festgelegt und über die Zentrierstifte 47 miteinander verbunden werden (Fig. 14). Anschließend wird der Lagerring 44 in Richtung des Schlauchendes über die Hülse 42 geschoben (Fig. 15), so dass die Kugelschicht-Außenfläche 43 der Hülse 42 an der zu dieser komplementären Innenfläche 45 des Lagerrings 44 zur Anlage kommt. Wie den Fig. 16 und 17 zu entnehmen ist, werden sodann die Halbringe 49a, 49b des Adapterrings 49 an dem Halteprofil 48 des Lagerrings 44 angeordnet, wobei das Profil 50 des Adapterrings 49 an dem Halteprofil 48 des Lagerrings 44 angreift. Schließlich wird das Festlegeprofil 51 des Adapterrings 49 an dem zu diesem komplementären Profil 52 des Unterteils 34 der Spannschelle 2 zum Eingriff gebracht (Fig. 18) und die Spannschelle 2 verschlossen, indem das Oberteil 37 mittels des Spannbügels 40 an dem Unterteil 34 fixiert wird (Fig. 19). Stattdessen können die Halbringe 49a, 49b des Adapterrings 49 auch zunächst in das Unterteil 34 und das Oberteil 37 der Spannschelle 2 eingeclipst und erst anschließend auf das Halteprofil 48 des Lagerrings 44 aufgesetzt werden. Anschließend wird dann die Spannschelle 2 mittels des Spannbügels 40 geschlossen.

Das Unterteil 34 der Spannschelle 2 wird vor dem Befestigen des Kabelführungsschlauchs 19 an einer Maschine, insbesondere einem Roboter 1a angeordnet, indem es über die an der Unterseite des Unterteils 34 der Spannschelle 2 angeordnete Bohrung 35 z.B. verschraubt wird. Das dem Kabelführungsschlauch 19 abgewandte Innenprofil 53 der Schelle 2 dient zum gemeinsamen Festlegen einer z.B. Versorgungskabel aufnehmenden Kabelnuss (nicht dargestellt), die an dem Profil 53 insbesondere dreh- und axialfest fixiert wird.

### Bezugszeichenliste

- 1: Vorrichtung
- 2: Klemmschelle
- 3: Unterseite der Klemmschelle
- 3a: Bohrung
- 4: Kabelnuss
- 5: Haltekanal
- 6: Schlitz
- 7: Halteprofil
- 8: Halteteil
- 9: Profil
- 10: Halbring
- 11: Haltestruktur
- 12: Festlegestruktur
- 13: Stift
- 14: Ausnehmung
- 15: Nut
- 16: Unterteil
- 17: Oberteil
- 18: Spannbügel
- 19: Kabelführungsschlauch
- 20: Halteprofil
- 21: Halteteil
- 22: Halbring
- 23: Profil
- 24: Haltestruktur
- 25: Zwischenraum
- 26: Spannschelle
- 27: Zentrieransatz
- 28: Spannschraube
- b: Breite des Zwischenraums
- d: Abstand der Halteprofile
- S: Innendurchmesser des Kabelführungsschlauchs
- s: Außendurchmesser des Zentrieransatzes
- 33: Spannschelle
- 34: Unterteil der Schelle
- 35: Bohrung
- 37: Oberteil der Schelle
- 38: Längsmittelachse der Schelle
- 39: Schwenkachse des Oberteils
- 40: Spannbügel
- 41: Halteteil
- 42: Hülse
- 42a, 42b: Halbschalen der Hülse
- 43: Kugelschicht-Außenfläche der Hülse
- 43a: Umfangserweiterung
- 44: Lagerring
- 45: Innenfläche des Lagerrings
- 46: Formausbildungen
- 47: Zentrierstift
- 48: Halteprofil des Lagerrings
- 49: Adapterring
- 49a, 49b: Halbringe des Adapterrings
- 50: Profil des Adapterrings
- 51: Festlegeprofil des Adapterrings
- 52: Profil der Schelle
- 53: Profil der Schelle
- 54: Richtungspfeil
- 55: Richtungspfeil
- α: Schwenkwinkel des Kabelführungsschlauchs

## Patentansprüche

1. Vorrichtung zum Festlegen eines Kabelführungsschlauchs an einer Einrichtung, wie insbesondere einem Roboter, **dadurch gekennzeichnet, dass** der Kabelführungsschlauch (19) axialfest und mindestens ein mit diesem in Verbindung stehendes Halteteil (8, 21) axial- und drehfest an der Einrichtung (1a) gehalten sind.

2. Vorrichtung nach Anspruch 1, **dadurch gekennzeichnet, dass** das Halteteil (8, 21) drehfest in der Klemmschelle (2) gehalten ist.

3. Vorrichtung nach Anspruch 1 oder 2, **dadurch gekennzeichnet, dass** das Halteteil (8) eine im Kabelführungsschlauch (19) verlaufende Kabel (19a) kraftschlüssig haltende Kabelnuss (4) aufnimmt.

4. Vorrichtung nach einem der Ansprüche 1 bis 3, **dadurch gekennzeichnet, dass** eine Klemmschelle (2) innenseitig jeweils wenigstens ein Halteprofil (7, 20) zum axial formschlüssigen Festlegen eines Halteteils (21) für den Kabelführungsschlauch (19) und eines Halteteils (8) für die Kabelnuss (4) mit jeweils einem zu dem Halteprofil (7, 20) der Klemmschelle (2) komplementären Profil (9, 23) aufweist.

5. Vorrichtung nach Anspruch 4, **dadurch gekennzeichnet, dass** die Halteprofile (7, 20) der Klemmschelle (2) einen hinreichenden axialen Abstand (d) aufweisen, um zwischen den einander zugekehrten Stirnseiten des Kabelführungsschlauchs (19) und der Kabelnuss (4) für einen Zwischenraum (25) zu sorgen.

6. Vorrichtung nach Anspruch 4 oder 5, **dadurch gekennzeichnet, dass** das Halteteil (21) für den Kabelführungsschlauch (19) zwei Halbringe (22) aufweist, die an ihrer Innenseite mit einer Haltestruktur (24) zum axial formschlüssigen Festlegen am Umfang des Kabelführungsschlauchs (19) ausgestattet sind.

7. Vorrichtung nach Anspruch 6, **dadurch gekennzeichnet, dass** der Kabelführungsschlauch (19) zumindest endseitig mit einer Wellung, insbesondere einer rechteck- oder trapezförmigen Wellung, ausgebildet ist und die Haltestruktur (21) der Halbringe (22) des Halteteils (21) für den Kabelführungsschlauch (19) in dessen gewellte Struktur eingreifen.

8. Vorrichtung nach Anspruch 4 oder 5, **dadurch gekennzeichnet, dass** das Halteteil (8) für die Kabelnuss (4) zwei Halbringe (10) aufweist, die an ihrer Innenseite mit einer Haltestruktur (11) zum axial formschlüssigen Festlegen an einer zu dieser komplementären, am Umfang der Kabelnuss (4) angeordneten Festlegestruktur (12) ausgestattet sind.

9. Vorrichtung nach Anspruch 8, **dadurch gekennzeichnet, dass** zumindest ein Halbring (10) des Halteteils (8) für die Kabelnuss (4) mittels eines ihn durchsetzenden Stiftes (13) sowohl an der Kabelnuss (4) als auch an der Klemmschelle (2) drehfest fixierbar ist.

10. Vorrichtung nach Anspruch 9, **dadurch gekennzeichnet, dass** an der der Kabelnuss (4) zugewandten Stirnseite der Klemmschelle (2) eine Nut (15) zum Aufnehmen eines Endes des Stiftes (13) angeordnet ist.

11. Vorrichtung nach Anspruch 9 oder 10, **dadurch gekennzeichnet, dass** am Umfang der Kabelnuss (4) im Bereich der Festlegestruktur (12) eine Ausnehmung (14) zum Aufnehmen eines Endes des Stiftes (13) angeordnet ist.

12. Vorrichtung nach einem der Ansprüche 1 bis 11, **dadurch gekennzeichnet, dass** die Kabelnuss (4) einen in den Kabelführungsschlauch (19) eingreifenden Zentrieransatz (27) aufweist.

13. Vorrichtung nach einem der Ansprüche 1 bis 12, **dadurch gekennzeichnet, dass** die Kabelnuss (4) nach Art eines Klemmstücks mit mehreren axial angeordnete Haltekanälen (5) zum kraftschlüssigen Festlegen der Kabel ausgebildet ist.

14. Vorrichtung nach Anspruch 13, **dadurch gekennzeichnet, dass** die Kabelnuss (4) aus einem elastischen Material besteht und die Haltekanäle (5) über Schlitze (6) mit dem Umfang der Kabelnuss (4) verbunden sind.

15. Vorrichtung nach Anspruch 13 oder 14, **dadurch gekennzeichnet, dass** eine die Kabelnuss (4) umgreifende Spannschelle (26) vorgesehen ist.

16. Vorrichtung nach Anspruch 15, **dadurch gekennzeichnet, dass** die Spannkraft der Spannschelle (26) variabel ist.

17. Vorrichtung nach einem der Ansprüche 1 bis 16, **dadurch gekennzeichnet, dass** ein Halteteil (41) eine Hülse (42) mit einer Kugelschicht-Außenfläche (43) aufweist und die Hülse (42) bezüglich der Längsmittelachse (38) der Schelle (2) sowohl dreh- als auch schwenkbar an derselben gehalten ist.

18. Vorrichtung nach Anspruch 17, **dadurch gekennzeichnet, dass** die Hülse (42) zwei Halbschalen (42a, 42b) aufweist, die an ihrer Innenseite mit Formausbildungen (46) zum axial formschlüssigen Festlegen am Umfang des Kabelführungsschlauchs (19) ausgestattet sind.

19. Vorrichtung nach Anspruch 18, **dadurch gekennzeichnet, dass** der Kabelführungsschlauch (19) zumindest endseitig mit einer Wellung, wie einer im wesentlichen rechteck- oder trapezförmigen Wellung, ausgebildet ist und die Formausbildungen (46) der Halbschalen (42a, 42b) der Hülse (42) in die Wellung des Kabelführungsschlauchs (19) eingreifen.

20. Vorrichtung nach einem der Ansprüche 17 bis 19, **dadurch gekennzeichnet, dass** das Halteteil (41) einen die Hülse (42) aufnehmenden Lagerring (44) mit einer zu der Kugelschicht-Außenfläche (43) der Hülse (42) komplementären Innenfläche (45) aufweist.

21. Vorrichtung nach Anspruch 20, **dadurch gekennzeichnet, dass** der Lagerring (44) an seiner der Hülse (42) abgewandten Seite mit einem Halteprofil (48) zum Festlegen an der Schelle (2) ausgestattet ist.

22. Vorrichtung nach Anspruch 20 oder 21, **dadurch gekennzeichnet, dass** das Halteprofil (48) des Lagerrings (44) an einem zu diesem komplementären Profil (52) der Schelle (2) festlegbar ist.

23. Vorrichtung nach Anspruch 20 oder 21, **dadurch gekennzeichnet, dass** das Halteprofil (48) des Lagerrings (44) an einem zu diesem komplementären Profil (50) eines Adapterrings (49) festlegbar ist, der an seiner dem Lagerring (44) abgewandten Seite ein Festlegeprofil (51) zum Festlegen an einem zu diesem komplementären Profil (52) der Schelle (2) aufweist.

24. Vorrichtung nach Anspruch 23, **dadurch gekennzeichnet, dass** der Adapterring (49) an seiner dem Lagerring (44) zugewandten Seite einen größeren Durchmesser als an seiner diesem abgewandten Seite aufweist.

25. Vorrichtung nach Anspruch 23 oder 24, **dadurch gekennzeichnet, dass** der Adapterring (49) zwei Halbringe (49a, 49b) aufweist.

26. Vorrichtung nach einem der Ansprüche 20 bis 25, **dadurch gekennzeichnet, dass** der Lagerring (44) mit seinem Halteprofil (48) unmittelbar oder über den Adapterring (49) axialfest an der Schelle (2) festlegbar ist.

27. Vorrichtung nach einem der Ansprüche 17 bis 26, **dadurch gekennzeichnet, dass** an der dem Kabelführungsschlauch (19) abgewandten Seite der Schelle (2) eine die Kabel kraftschlüssig haltende Kabelnuss axial- und drehfest festlegbar ist.

28. Vorrichtung nach einem der Ansprüche 17 bis 27, **dadurch gekennzeichnet, dass** die Schelle (2) eine Spannschelle mit einem an der Maschine befestigbaren Unterteil (34) und einem an diesem angelenkten, mittels eines Spannbügels (40) verspannbaren Oberteil (37) ist.

29. Einrichtung, insbesondere Roboter, mit zumindest teilweise außenseitig verlaufenden Kabeln, insbesondere Versorgungskabeln von Werkzeugen der Einrichtung, **gekennzeichnet durch** wenigstens eine Vorrichtung (1) gemäß einem der Ansprüche 1 bis 27.

## Claims

1. Apparatus for fixing a cable guidance hose to a device, such as in particular a robot, **characterized in that** the cable guidance hose (19) is held in axially fixed manner and at least one holding part (8, 21) connected thereto is held in axially fixed and non-rotary manner on the device (1a).

2. Apparatus according to claim 1, **characterized in that** the holding part (8, 21) is held in non-rotary manner in the clamping clip (2).

3. Apparatus according to claim 1 or 2, **characterized in that** the holding part (8) receives a cable clamping piece (4) non-positively holding cables (19a) in the cable guidance hose (19).

4. Apparatus according to one of the claims 1 to 3, **characterized in that** a clamping clip (2) has on the inside at least one holding profile (7, 20) for the axial, positive fixing of a holding part (21) for the cable guidance hose (19) and a holding part (8) for the cable clamping piece (4) with in each case a profile (9, 23) complimentary to the holding profile (7, 20) of the clamping clip (2).

5. Apparatus according to claim 4, **characterized in that** the holding profiles (7, 20) of the clamping clip (2) have an adequate axial spacing (d), so as to ensure between the facing end faces of the cable guidance hose (19) and the cable clamping piece (4) an adequate gap (25).

6. Apparatus according to claim 4 or 5, **characterized in that** the holding part (21) for the cable guidance hose (19) has two half-rings (22), which are equipped on their inside with a holding structure (24) for, axial, positive fixing on the circumference of the cable guidance hose (19).

7. Apparatus according to claim 6, **characterized in that**, at least at the end, the cable guidance hose (19) has a corrugation, particularly a rectangular or trapezoidal corrugation and the holding structure (21) of the half-rings (22) of the holding part (21) for the cable guidance hose (19) engage in the corrugated structure thereof.

8. Apparatus according to claim 4 or 5, **characterized in that** the holding part (8) for the cable clamping piece (4) has two half-rings (10), which are equipped on their inside with a holding structure .(11) for axial, positive fixing to a fixing structure (12) complimentary thereto and located on the circumference of the cable clamping piece (4).

9. Apparatus according to claim 8, **characterized in that** at least one half-ring (10) of the holding part (8) for the cable clamping piece (4) is fixable in non-rotary manner by means of a pin (13) traversing it both to the cable clamping piece (4) and to the clampling clip (2).

10. Apparatus according to claim 9, **characterized in that** on the end face of the clamping clip (2) facing the cable clamping piece (4) is provided a groove (15) for receiving one end of the pin (13).

11. Apparatus according to claim 9 or 10, **characterized in that** on the circumference of the cable clamping piece (4), in the vicinity of the fixing structure (12), is provided a recess (14) for receiving one end of the pin (13).

12. Apparatus according to one of the claims 1 to 11, **characterized in that** the cable clamping piece (4) has a spigot (27) engaging in the cable guidance hose (19).

13. Apparatus according to one of the claims 1 to 12, **characterized in that** the cable clamping piece (4) is constructed as a clamp with several axially positioned holding channels (5) for the non-positive fixing of the cables.

14. Apparatus according to claim 13, **characterized in that** the cable clamping piece (4) is made from an elastic material and the holding channels (5) are connected by means of slots (6) to the circumference of the clamping piece (4).

15. Apparatus according to claim 13 or 14, **characterized in that** a tension clip (26) embracing piece (4) is provided.

16. Apparatus according to claim 15, **characterized in that** the tension force of tension clip (26) is variable.

17. Apparatus according to one of the claims 1 to 16, **characterized in that** a holding part (41) has a sleeve (42) with a spherical segment outer face (43) and the sleeve (42) is held with respect to the median longitudinal axis (38) of the clip (2), in both rotary and pivotable manner thereon.

18. Apparatus according to claim 17, **characterized in that** the sleeve (42) has two half shells (42a, 42b), which are equipped on their inside with shapes (46) for axial, positive fixing to the circumference of the cable guidance hose (4).

19. Apparatus according to claim 18, **characterized in that**, at least at the end, the cable guidance hose (19) is provided with a corrugation, such as an essentially rectangular or trapezoidal corrugation and the shapes (46) of the half-sells (42a, 42b) of the sleeve (42) engage in the corrugation of the guidance hose (19).

20. Apparatus according to one of the claims 17 to 19, **characterized in that** the holding part (41) has a ring bearing (44) receiving the sleeve (42) with an inner face (45) complimentary to the spherical segment outer face (43) of the sleeve (42).

21. Apparatus according to claim 20, **characterized in that** on its side remote from the sleeve (42), the ring bearing (44) is equipped with a holding profile (48) for fixing to the clip (2).

22. Apparatus according to claim 20 or 21, **characterized in that** the holding profile (48) of the ring bearing (44) can be fixed to a profile (52), complimentary thereto, of the clip (2).

23. Apparatus according to claim 20 or 21, **characterized in that** the holding profile (48) of the ring bearing (44) can be fixed to a profile (50), complimentary thereto, of an adaptor ring (49) and which is provided on its side remote from the ring bearing (44) with a fixing profile (51) for fixing on a profile (52) of the clip (2) complimentary thereto.

24. Apparatus according to claim 23, **characterized in that** on its side facing the ring bearing (44), the adaptor ring (49) has a larger diameter than on its side remote therefrom.

25. Apparatus according to claim 23 or 24, **characterized in that** the adaptor ring (49) has two half-rings (49a, 49b).

26. Apparatus according to one of the claims 20 to 25, **characterized in that** the ring bearing (44) with its holding profile (48) can be secured directly or via adaptor ring (49) in axially fixed manner to clip (2).

27. Apparatus according to one of the claims 17 to 26, **characterized in that** on the side of the clip (2) remote from the cable guidance hose (19) can be secured in axially fixed and non-rotary manner a cable clamping piece non-positively holding the cables.

28. Apparatus according to one of the claims 17 to 27, **characterized in that** the clip (2) is a tension clip with a base (34) fixable to the machine and a top (37) braceable by means of a shackle (40) and articulated thereto.

29. Device, particularly a robot, with at least partly externally positioned cables, particularly supply cables for tools of the device, **characterized by** at least one apparatus (1) according to one of the claims 1 to 27.

## Revendications

1. Dispositif de fixation d'une gaine de guidage de câbles sur une installation telle qu'en particulier un robot, **caractérisé en ce que** la gaine de guidage de câbles (19) est maintenu fixe axialement sur l'installation et au moins un élément de maintien (8,21) relié a la gaine de guidage de câble (1a) est maintenu fixes axialement et rigides en torsion sur l'installation (1a).

2. Dispositif selon la revendication 1, **caractérisé en ce que** l'élément de maintien (8, 21) est maintenu rigide en torsion dans le collier de fixation (2).

3. Dispositif selon la revendication 1 ou 2, **caractérisé en ce que** l'élément de maintien (8) loge une âme porteuse de câbles (4) qui maintient à ajustement serré les câbles (19a) passant dans la gaine de guidage de câbles (19).

4. Dispositif selon l'une quelconque des revendications 1 à 3, **caractérisé en ce que** chaque collier de fixation (2) présente à l'intérieur au moins un profil de maintien (7, 20) pour la fixation à ajustement serré axial d'un élément de maintien (21) pour la gaine de guidage de câbles (19) et d'un élément de maintien (8) pour l'âme porteuse de câbles (4) avec à chaque fois un profil (9, 23) complémentaire du profil de maintien (7, 20) du collier de fixation (2).

5. Dispositif selon la revendication 4, **caractérisé en ce que** les profils de maintien (7, 20) du collier de fixation (2) présentent une distance (d) axiale suffisante pour ménager un espace intermédiaire (25) entre les faces frontales en regard l'une de l'autre de la gaine de guidage de câbles (19) et de l'âme porteuse de câbles (4).

6. Dispositif selon la revendication 4 ou 5, **caractérisé en ce que** l'élément de maintien (21) de la gaine de guidage de câbles (19) présente deux demi-anneaux (22) pourvus sur leur face intérieure d'une structure de maintien (24) pour la fixation à ajustement serré axial sur le pourtour de la gaine de guidage de câbles (19).

7. Dispositif selon la revendication 6, **caractérisé en ce que** la gaine de guidage de câbles (19) est ondulée au moins à son extrémité, plus particulièrement selon une ondulation en forme de rectangle ou de trapèze, et **en ce que** la structure de maintien (21) des demi-anneaux (22) de l'élément de maintien (21) de la gaine de guidage de câbles (19) vient en prise dans la structure ondulée de celle-ci.

8. Dispositif selon la revendication 4 ou 5, **caractérisé en ce que** l'élément de maintien (8) pour l'âme porteuse de câbles (4) comporte deux demi-anneaux (10) pourvus sur leur face intérieure d'une structure de maintien (11) pour la fixation à ajustement serré axial à une structure de fixation (12) complémentaire de celle-ci, disposée sur le pourtour de l'âme porteuse de câbles (4).

9. Dispositif selon la revendication 8, **caractérisé en ce qu'**au moins un demi-anneau (10) de l'élément de maintien (8) de l'âme porteuse de câbles (4) peut être fixé rigide en torsion au moyen d'un goujon (13) qui le traverse aussi bien à l'âme porteuse de câbles (4) qu'au collier de fixation (2).

10. Dispositif selon la revendication 9, **caractérisé en ce qu'**une rainure (15) est ménagée dans la face frontale du collier de fixation (2) en regard de l'âme porteuse de câbles (4) pour recevoir une extrémité du goujon (13).

11. Dispositif selon la revendication 9 ou 10, **caractérisé en ce qu'**un évidement (14) est ménagé sur le pourtour de l'âme porteuse de câbles (4) dans la zone de la structure de fixation (12) pour recevoir une extrémité du goujon (13).

12. Dispositif selon l'une quelconque des revendications 1 à 11, **caractérisé en ce que** l'âme porteuse de câbles (4) présente une saillie de centrage (27) venant en prise dans la gaine de guidage de câbles (19).

13. Dispositif selon l'une quelconque des revendications 1 à 12, **caractérisé en ce que** l'âme porteuse de câbles (4) présente à la manière d'une pièce de serrage plusieurs canaux de maintien (5) disposés axialement pour la fixation à ajustement serré des câbles.

14. Dispositif selon la revendication 13, **caractérisé en ce que** l'âme porteuse de câbles (4) est réalisée dans un matériau élastique et **en ce que** les canaux de maintien (5) sont reliés par des fentes (6) au pourtour de l'âme porteuse de câbles (4).

15. Dispositif selon la revendication 13 ou 14, **caractérisé en ce que** l'on prévoit un collier réglable (26) entourant l'âme porteuse de câbles (4).

16. Dispositif selon la revendication 15, **caractérisé en ce que** la force de tension du collier réglable (26) est variable.

17. Dispositif selon l'une quelconque des revendications 1 à 16, **caractérisé en ce qu'**un élément de maintien (41) présente un manchon (42) à surface extérieure (43) en segment sphérique à deux bases et **en ce que** le manchon (42) est maintenu sur l'axe longitudinal médian (38) du collier (2) à la fois pivotant et basculant par rapport à cet axe.

18. Dispositif selon la revendication 17, **caractérisé en ce que** le manchon (42) présente deux demi-coquilles (42a, 42b) pourvues sur leur face intérieure de conformations (46) pour la fixation à ajustement serré axial sur le pourtour de la gaine de guidage de câbles (19).

19. Dispositif selon la revendication 18, **caractérisé en ce que** la gaine de guidage de câbles (19) présente au moins à son extrémité une ondulation, par exemple une ondulation sensiblement rectangulaire ou trapézoïdale, et **en ce que** les conformations (46) des demi-coquilles (42a, 42b) du manchon (42) viennent en prise dans l'ondulation de la gaine de guidage de câbles (19).

20. Dispositif selon l'une quelconque des revendications 17 à 19, **caractérisé en ce que** l'élément de maintien (41) présente une bague de palier (44) logeant le manchon (42) dont la face intérieure (45) est complémentaire de la surface extérieure (43) en segment sphérique à deux bases du manchon (42).

21. Dispositif selon la revendication 20, **caractérisé en ce que** la bague de palier (44) présente sur sa face opposée au manchon (42) un profil de maintien (48) pour sa fixation au collier (2).

22. Dispositif selon la revendication 20 ou 21, **caractérisé en ce que** le profil de maintien (48) de la bague de palier (44) peut être fixé à un profil (52) du collier (2) qui lui est complémentaire.

23. Dispositif selon la revendication 20 ou 21, **caractérisé en ce que** le profil de maintien (48) de la bague de palier (44) peut être fixé au profil (50) qui lui est complémentaire d'une bague de raccord (49) qui présente sur sa face opposée à la bague de palier (44) un profil de fixation (51) pour sa fixation à un profil (52) du collier (2) qui lui est complémentaire.

24. Dispositif selon la revendication 23, **caractérisé en ce que** la bague de raccord (49) présente sur son côté en regard de la bague de palier (44) un diamètre plus grand que sur son côté opposé à celle-ci.

25. Dispositif selon la revendication 23 ou 24, **caractérisé en ce que** la bague de raccord (49) présente deux demi-anneaux (49a, 49b).

26. Dispositif selon l'une quelconque des revendications 20 à 25, **caractérisé en ce que** la bague de roulement (44) peut être montée fixe axialement sur le collier (2) par son profil de maintien (48) directement ou par l'intermédiaire de la bague de raccord (49).

27. Dispositif selon l'une quelconque des revendications 17 à 26, **caractérisé en ce que** sur la face du collier (2) opposée à la gaine de guidage de câbles (19) on peut monter fixe axialement et rigide en torsion une âme porteuse de câbles maintenant les câbles à ajustement serré.

28. Dispositif selon l'une quelconque des revendications 17 à 27, **caractérisé en ce que** le collier (2) est un collier réglable comprenant une partie inférieure (34) pouvant être fixée sur la machine et une partie supérieure (37) articulée à la partie inférieure mise sous tension au moyen d'une bride de fixation (40).

29. Installation, plus particulièrement robot, comprenant des câbles s'étendant au moins partiellement à l'extérieur, plus particulièrement des câbles d'alimentation d'outils de l'installation, **caractérisé par** au moins un dispositif (1) selon l'une des revendications 1 à 27.
